# EUROPÄISCHE PATENTANMELDUNG

(11) **EP 0 905 478 A2**
(43) Veröffentlichungstag der Anmeldung: **31.03.1999**
(21) Anmeldenummer: 98112493.6
(22) Anmeldetag: 06.07.1998
(51) Int. Cl.: G01B 17/02

(54) **Verfahren zur Wanddickenmessung**

(30) Priorität: 30.09.1997 DE 19743300
(71) Anmelder: SIEMENS AKTIENGESELLSCHAFT, 80333 München (DE)
(72) Erfinder: Fischer, Bernhard, 84513 Töging (DE)

(57) **Zusammenfassung**

Zur Bestimmung der Wanddicke (d) wird mittels eines Ultraschallwandlers (3) ein Ultraschallsignal (US) in eine Flüssigkeit (5) in einem Prüfkopf (4) eingekoppelt und auf die Wandung (1) z. B. eines Rohres mit einer Flüssigkeit (2) darin gerichtet. Es wird die Wanddicke als Hälfte derjenigen Wellenlänge des Ultraschallsignales bestimmt, für die sich ein Minimum des an den Begrenzungen (11, 12) der Wandung reflektierten Anteiles (R) des Signales ergibt. Das Verfahren ist auch zur industriellen Qualitätskontrolle von Wandstärken in einem Tauchbecken geeignet.

## Beschreibung

Die vorliegende Erfindung betrifft ein Verfahren, mit dem die Dicke von Wandungen unter Verwendung von Ultraschall bestimmt werden kann.

Bei der industriellen Durchflußmessung mit Ultraschall muß der Weg des Ultraschalls genau nachvollziehbar sein. Das bedeutet insbesondere, daß die Weglängen und die Winkel der Schallspiegel bekannt sein müssen. Die Weglängen können sich jedoch z. B. durch Abrasion des Materials, an dem der Ultraschall reflektiert wird, verändern. Wenn die durch Abrasion verminderte Wanddicke z. B. eines Durchflußrohres gemessen werden kann, kann auch die aktuelle Weglänge berechnet werden. Das ermöglicht dann durch nachträgliche Kalibrierung, den geforderten Genauigkeitsstandard zu halten. Eine laufende Überwachung der Wanddicke eines Meßrohres dient auch dazu, sicherzustellen, daß die für die geforderte Druckfestigkeit minimal erforderliche Wandstärke nicht unterschritten wird.

Bei der Wanddickenmessung mit Ultraschall wird ein Prüfkopf verwendet, der an die Rohrwand angesetzt wird und nach dem Puls-Echoverfahren Ultraschallimpulse in die Rohrwand aussendet und die Reflexionssignale empfängt. Aus der Laufzeit zwischen dem Aussenden des Impulses und der Empfangszeit und aus der bekannten Schallgeschwindigkeit läßt sich die Dicke der Rohrwand berechnen. Dieses Verfahren hat den Nachteil, daß es sich beim Prüfkopf um ein schwingungsfähiges System handelt und der ausgesendete Ultraschallimpuls daher keinen ideal zeitlich begrenzten Verlauf besitzt. Die Überlagerung von Reflexionen oder von Reflexion- und Abklingverhalten kann die Messung schwierig oder sogar unmöglich machen. Problematisch sind vor allem Messungen an sehr dünnen Wänden.

Aufgabe der vorliegenden Erfindung ist es, ein Verfahren zur Wanddickenmessung anzugeben, das einfach und zuverlässig auch zur Messung dünner Wandungen eingesetzt werden kann.

Diese Aufgabe wird mit dem Verfahren mit den Merkmalen des Anspruches 1 gelöst. Ausgestaltungen ergeben sich aus den abhängigen Ansprüchen.

Bei dem erfindungsgemäßen Verfahren wird eine Wandung, deren Dicke gemessen werden soll, beidseitig von Medien, z. B. von Flüssigkeiten, umgeben. Diese Medien werden so gewählt, daß sie geringere akustische Impedanzen aufweisen als die akustische Impedanz der Wandung. Wenn die Dicke einer Rohrwandung bestimmt werden soll, so läßt man das Rohr vorzugsweise von einer Flüssigkeit durchströmen und setzt von außen an die Rohrwandung einen Prüfkopf mit einer weiteren Flüssigkeit oder einem anderen geeigneten Medium ("Vorlauffluid") an. Das Vorlauffluid befindet sich in einem Behälter des Prüfkopfes, der mit der Rohrwand so in Kontakt gebracht werden kann, daß zwischen der Flüssigkeit und der Rohrwand entweder keine oder nur eine sehr dünne, die Messung nicht beeinflussende Zwischenwand vorhanden ist. Der Prüfkopf verfügt ferner über einen Ultraschallwandler, z. B. eine Piezokeramik, der Ultraschall aussenden und vorzugsweise auch empfangen kann. Ein erzeugtes Ultraschallsignal wird in das Vorlauffluid eingekoppelt und auf die zu messende Rohrwand ausgerichtet.

An dem Material der Rohrwand (z. B. Stahl) wird der Ultraschall reflektiert. Eine weitere Reflexion tritt an der inneren Rohrwand auf. Bei einem hinreichend langen Wellenzug ( 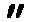 burst") erfolgt eine destruktive Überlagerung der reflektierten Ultraschallsignale genau dann, wenn die Dicke der Rohrwand gerade ein ganzzahliges Vielfaches der halben Wellenlänge des Ultraschallsignales ausmacht. Wenn mit Z₁ die Impedanz des Vorlauffluides in dem Prüfkopf bezeichnet wird, mit Z₂ die Impedanz der Rohrwandung und mit Z₃ die Impedanz des in dem Rohr strömenden Meßfluides, dann gilt Z₂ >> Z₁ und Z₂ >> Z₃. In diesem Fall ergibt sich für jede Wellenlänge der Ultraschallsignale, unter deren ganzzahligen Vielfachen sich auch genau der Wert der doppelten Wanddicke befindet, ein Minimum der Reflexion des Ultraschalls an der Wand. Bei dem erfindungsgemäßen Verfahren wird eine Frequenz des Ultraschallwandlers gesucht, bei der die Reflexion minimal wird. Die Wellenlänge des Ultraschalles in dem Material der Wandung läßt sich aus der Frequenz bestimmen, weil die Schallgeschwindigkeit in der Wand gleich ist dem Produkt aus der Frequenz und der Wellenlänge in der Wand. Diese Wellenlänge erfüllt dann die Bedingung minimaler Reflexion, so daß sich die Wanddicke daraus bestimmen läßt. Da sich minimale Reflexionen für verschiedene Frequenzen ergeben, muß die tiefste Frequenz gesucht werden, bei der die minimale Reflexion auftritt. Das ist am einfachsten möglich, wenn bereits ein Näherungswert für die zu messende Wanddicke bekannt ist.

Vorteilhaft wird die Impedanz Z₁ des Vorlauffluides so gewählt, daß die Reflexionsänderung bei Erreichen der Frequenz des Reflexionsminimums möglichst groß wird. Dieses Minimum ist dann besonders leicht zu erkennen. Statt Flüssigkeiten können andere Medien verwendet werden, z. B. auch ein Festkörper, wenn das Medium eine kleinere akustische Impedanz hat als die auszumessende Wand selbst. Das erfindungsgemäße Verfahren läßt sich auch zur Wanddickenmessung von Prüfobjekten in einem Tauchbecken z. B. als Qualitätskontrolle in einem Produktionsprozeß einsetzen.

Es folgt eine genauere Beschreibung des erfindungsgemäßen Verfahrens anhand der Figuren 1 bis 4.
- Figur 1: zeigt eine Anordnung zur Messung der Rohrwand im Querschnitt.
- Figur 2: zeigt eine alternative Anordnung entsprechend Figur 1.
- Figur 3: zeigt eine weitere Abwandlung der in Figur 1 dargestellten Anordnung.
- Figur 4: zeigt eine Anordnung zur Wanddickenmessung in einem Tauchbecken.

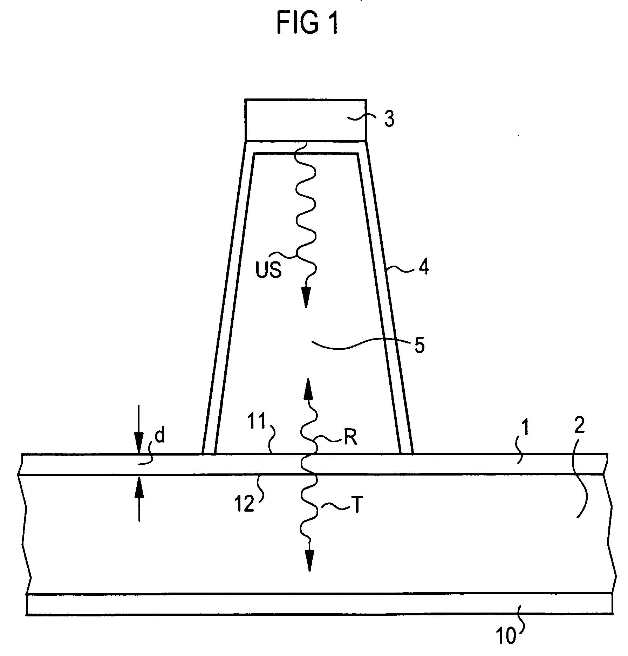

In Figur 1 ist im Querschnitt die Wandung 1 eines Rohres dargestellt, in dem ein Medium, z. B. eine Flüssigkeit, als Meßfluid vorhanden ist. Von außen wird an diese Rohrwand ein Prüfkopf mit einem Ultraschallwandler 3 und einem Behälter 4 angesetzt, der ein Medium, hier als Beispiel eine Flüssigkeit, als Vorlauffluid 5 enthält. Der Prüfkopf kann auch fest an der Wand montiert sein, z. B. für eine fortlaufende Wanddickenmessung. Um die Dicke d der Wandung 1 zu messen, wird von dem Ultraschallwandler 3 ein Ultraschallpuls auf die Wand gerichtet. Dieses Ultraschallsignal US wird an der äußeren Oberfläche 11 der Wandung 1 und an der inneren Oberfläche 12 der Wandung 1 reflektiert. Aus dem Ultraschallsignal US entsteht ein Reflexionsanteil R und ein Transmissionsanteil T.

Die Ultraschallimpedanz von Flüssigkeiten liegt im allgemeinen im Bereich von 50·10⁴ bis 300·10⁴ kg m/s. Ausnahmen wie Quecksilber sind sehr selten. Die Impedanz von Stahl ist mit 4524·10⁴ kg m/s wesentlich höher. Wird im Vorlauf eine typische Flüssigkeit verwendet und soll die Dicke eines Stahlrohres bestimmt werden, so ist zunächst die Reflexion des Ultraschalles in dem Vorlauffluid 5 gegen den Stahl der Rohrwandung 1 hoch (87,5 bis 97,8 % Amplitudenreflexion). Erst bei der Einstellung einer Frequenz minimaler Reflexion kommt die Reflexion des Ultraschalles gegenüber der Flüssigkeit des Meßfluides 2 zum Tragen (-71 bis +71 % Amplitudenreflexion, also evtl. sogar mit Vorzeichenwechsel). Sind Meßfluid 2 und Vorlauffluid 5 gleich, dann kann unter idealen Bedingungen auch die vollständige Entspiegelung, d. h. vollständige Unterbindung der Reflexion, erreicht werden. Der Reflexionsanteil R verschwindet dann, und der Transmissionsanteil T ist allein vorhanden. Das Minimum bei einer Reflexion zwischen zwei Flüssigkeiten ist aber in jeden Fall deutlich verschieden von der Flüssigkeit-Stahl-Reflexion und kann deshalb leicht gefunden werden.

Für ein schnelles Auffinden der gesuchten Frequenz und damit der gesuchten Wellenlänge ist es vorteilhaft, wenn vor der Messung Informationen über die ungefähre Dicke der Wandung vorliegen. Andernfalls müssen evtl. mehrere Messungen durchgeführt werden, bevor die Wanddicke sicher bestimmt ist. Bei den eingangs beschriebenen Messungen, mit denen festgestellt werden soll, welche Verminderung einer bekannten Wanddicke als Folge von Materialabrasion auftritt, gestaltet sich die erfindungsgemäße Messung vergleichsweise einfach.

Das erfindungsgemäße Verfahren kann, wie in Figur 1 dargestellt ist, mit nur einem Ultraschallwandler 3, der abwechselnd als Sender und als Empfänger betrieben wird, durchgeführt werden. Das ist möglich, weil es für die Messung genügt, die zur Schallerzeugung vorgesehene Piezokeramik des Ultraschallwandlers mit einem Sinuspuls (Sinusburst) anzuregen. Die Pulslänge wird so gewählt, daß im eingeschwungenen Zustand des Ultraschallwandlers gemessen werden kann. Entsprechend muß eine Vorlaufstrecke des Ultraschallsignales US eingerichtet werden, die so lang ist, daß die Wellenfront des Reflexionsanteiles R erst nach dem Ende des Sendevorganges beim Ultraschallwandler eintrifft. Daher ist der Behälter 4 des Prüfkopfes, der das Vorlauffluid 5 enthält, ausreichend lang zu wählen, wie das in Figur 1 angedeutet ist. Die Schallfrequenz des Ultraschallwandlers wird über einen Regelvorgang solange nachgeführt, bis ein minimaler Schallpegel vorliegt (Resonanzabstimmung).

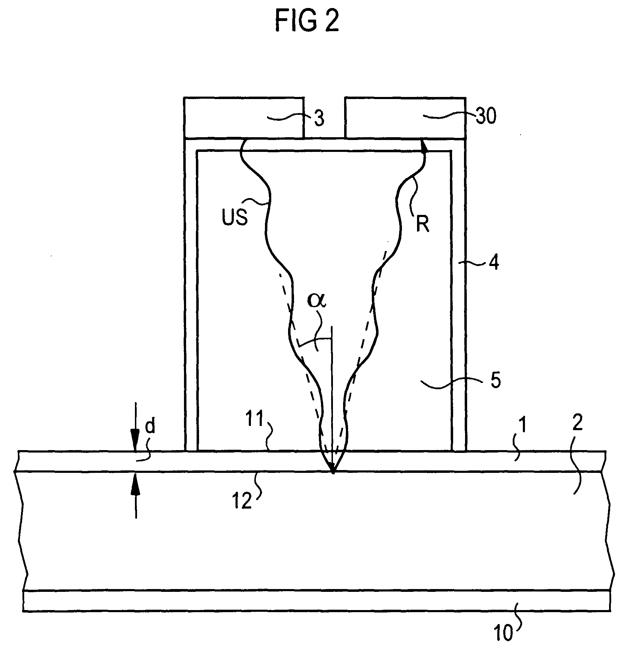

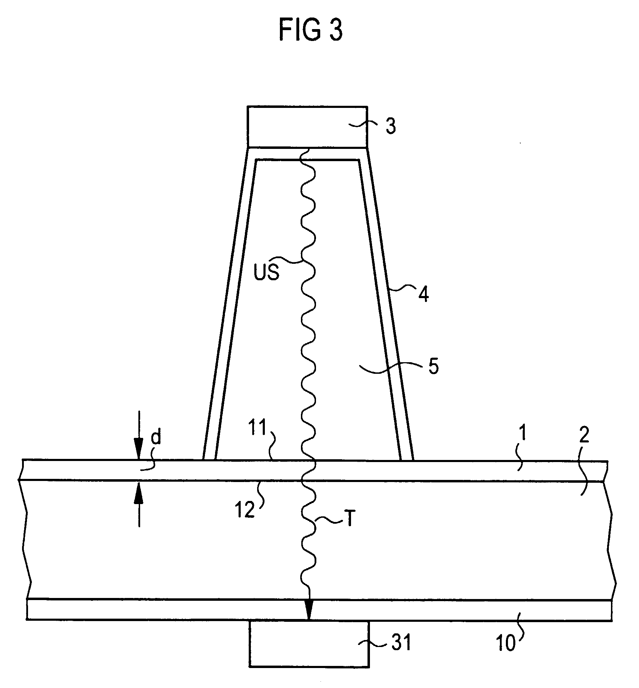

Figur 2 zeigt den Querschnitt, der in Figur 1 dargestellt ist, für einen abgewandelten Prüfkopf mit zwei Ultraschallwandlern, von denen einer als Sender 3 und einer als Empfänger 30 verwendet wird. In diesem Fall kann der Sender 3 im Dauerbetrieb (CW, continues wave) betrieben werden. Der als Empfänger 30 verwendete Ultraschallwandler empfängt dann kontinuierlich den Reflexionsanteil R des Ultraschallsignales US. Hier fällt der Schall unter einem Winkel α zur Senkrechten auf die äußere Oberfläche 11 der Wandung 1 auf. Die Wanddicke wird daher unter Einbeziehung des Kosinus dieses Winkel α berechnet. Einfacher ist es, wenn entsprechend Figur 3 der als Empfänger 31 dienende zweite Ultraschallwandler an oder in der gegenüberliegenden Rohrwand 10 angebracht ist.

Entsprechend Figur 3 wird bei der bevorzugten Ausführungsform mit zwei Ultraschallwandlern ein Prüfkopf verwendet, der ähnlich der in Figur 1 dargestellten Ausführung gestaltet ist. Bei der gesuchten Frequenz minimaler Reflexion ist im wesentlichen nur der Transmissionsanteil T des Ultraschallsignales US vorhanden, der das Meßfluid 2 durchdringt und in den Empfänger 31 an der gegenüberliegenden Rohrwand 10 gelangt. Dieser Empfänger 31 ist vorzugsweise ebenfalls eine Piezokeramik. Grundsätzlich kann der Empfänger in der Wand oder an der Wand innerhalb oder außerhalb des Rohres angebracht sein. An den Oberflächen der rückwärtigen Wandung 10 des Rohres auftretende zusätzliche Reflexionen sind für die Messungen unschädlich, wenn die Rohrwand ringsum die gleiche Dicke aufweist.

Da bei der Ausführung des Prüfkopfes entsprechend Figur 3 der Transmissionsanteil T empfangen wird, muß hier die Frequenz des Senders 3 solange durchgestimmt werden, bis das Signal am Empfänger 31 maximal wird. Dann ist der Reflexionsanteil minimal. Da bei dieser Anordnung mit zwei Ultraschallwandlern der Sendevorgang im Gegensatz zu dem Pulsbetrieb nicht unterbrochen werden muß, kann das Minimum der Reflexion mit einer größeren Genauigkeit bestimmt werden. Eine Dämpfung des Ultraschallsignales im Meßfluid 2 beeinträchtigt die Messung nicht, solange das Ultraschallsignal am Empfänger 31 mit einer ausreichenden Intensität ankommt, um das Maximum des Transmissionsanteils T bestimmen zu können. Auch dürfen die Impedanzen der Flüssigkeiten im Vorlauf (Vorlauffluid 5) und im Rohr (Meßfluid 2) verschieden sein. Voraussetzung ist nur, daß der Sprung der Impedanzen zwischen Vorlauffluid und Rohrwand größer ist als der Sprung der Impedanzen zwischen Vorlauffluid und Meßfluid. Dann kann die Sendefrequenz des Maximums des Transmissionsanteiles gefunden werden.

Statt das Minimum der Reflexion bzw. das Maximum der Transmission zu bestimmen, kann das Maximum der Reflexion und das Minimum der Transmission bestimmt werden. Eine zugehörige maximale Wellenlänge ist dann nicht gleich der doppelten Dicke der Wand, sondern gleich dem Vierfachen der Wandstärke.

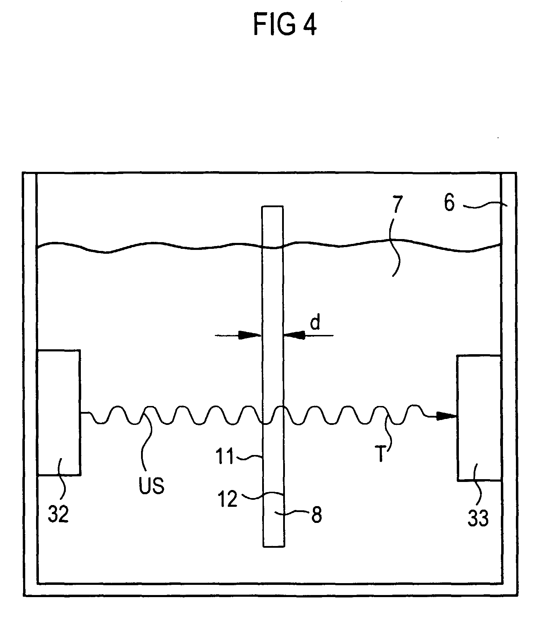

Das erfindungsgemäße Verfahren eignet sich auch dazu, die Dicke einer Wandung z. B. eines ebenen Prüfobjektes zu bestimmen. Zu dem Zweck kann die Messung in einem Tauchbecken vorgenommen werden, in das eine Wandung eingetaucht wird. Figur 4 zeigt eine für diese Messung geeignete Anordnung eines Tauchbeckens 6, das mit einer Flüssigkeit 7 gefüllt ist. Eine Wand 8, deren Dicke d zu messen ist, wird in die Flüssigkeit eingetaucht, und ein Ultraschallsignal US von einem Ultraschallwandler 32 als Sender auf die Wand gerichtet. Ein weiterer Ultraschallwandler 33 als Empfänger erfaßt den die Wand 8 durchdringenden Transmissionsanteil T des Ultraschallsignales. Da sich auf beiden Seiten der eingetauchten Wand 8 die gleiche Flüssigkeit befindet, verschwindet die Reflexion beim Erreichen der zugehörigen Frequenz unter idealen Bedingungen vollständig oder nimmt zumindest ein Minimum an. Diese Erscheinung kann auch als Maximum des Transmissionsanteiles T in der dargestellten Anordnung mit zwei Ultraschallwandlern gemessen werden. Statt dessen ist es möglich, nur einen Ultraschallwandler zu verwenden und das Minimum des Reflexionsanteiles im Burstbetrieb des Ultraschallwandlers zu bestimmen.

Das erfindungsgemäße Verfahren gestattet es, mit einfachen herkömmlichen Ausrüstungen eine sehr genaue Messung der Dicke von Wandungen vorzunehmen. Vorzugsweise wird dabei auf die tiefste Frequenz, die zu einem Minimum des Reflexionsanteiles gehört, abgestimmt. Das Verfahren läßt sich mit besonders geringem Aufwand durchführen, wenn nur ein Ultraschallwandler eingesetzt wird. Falls eine größere Meßgenauigkeit erforderlich ist, wird das Verfahren vorzugsweise mit zwei getrennten Ultraschallwandlern für Senden und Empfangen ausgeführt.

## Patentansprüche

1. Verfahren zur Bestimmung der Dicke von Wandungen, bei dem
eine Wandung (1; 8) mit zwei Begrenzungsflächen (11, 12) beidseitig von Medien (2, 5; 7) mit kleineren akustischen Impedanzen als die der Wandung umgeben wird,
auf einer Seite der Wandung ein auf die Wandung gerichtetes Ultraschallsignal (US) in das Medium eingekoppelt wird,
ein in den Begrenzungsflächen reflektiertes Ultraschallsignal (R) oder ein durch die Begrenzungsflächen transmittiertes Ultraschallsignal (T) aufgenommen wird und
die tiefste Frequenz minimaler Reflexion oder maximaler Reflexion des Ultraschallsignals an der Wandung bestimmt wird.

2. Verfahren nach Anspruch 1,
mit dem die Dicke (d) der Wandung (1) eines Rohres bestimmt wird,
bei dem ein Medium (2) mit kleinerer akustischer Impedanz als die der Wandung in das Rohr eingebracht wird,
bei dem an der äußeren Begrenzungsfläche (11) der Wandung ein Behälter (4) mit einem Medium (5) mit kleinerer akustischer Impedanz als die der Wandung angebracht wird und
bei dem mittels mindestens eines Ultraschallwandlers (3; 30, 31) ein Ultraschallsignal (US) durch das Medium in dem Behälter hindurch auf die Wandung gerichtet und wieder empfangen wird.

3. Verfahren nach Anspruch 2,
bei dem als Medium in dem Behälter das gleiche Medium wie im Innern des Rohres gewählt wird.

4. Verfahren nach Anspruch 1,
bei dem eine Wandung (8), deren Dicke (d) bestimmt werden soll, derart in eine Flüssigkeit (7) eingetaucht wird, daß zumindest Anteile beider Begrenzungsflächen (11, 12) der Wandung in Kontakt mit der Flüssigkeit gebracht sind und
bei dem mittels mindestens eines Ultraschallwandlers (32, 33) ein Ultraschallsignal (US) durch die Flüssigkeit hindurch auf die Wandung gerichtet und wieder empfangen wird.

5. Verfahren nach einem der Ansprüche 1 bis 4,
bei dem ein Ultraschallwandler im Burstbetrieb für Senden und Empfangen eines jeweils zeitlich begrenzten Ultraschallsignals verwendet wird.

6. Verfahren nach einem der Ansprüche 1 bis 4,
bei dem zwei Ultraschallwandler (3, 30) für Senden bzw. für Empfangen verwendet werden, die auf derselben Seite der Wandung eingesetzt werden.

7. Verfahren nach einem der Ansprüche 1 bis 4,
bei dem zwei Ultraschallwandler (3, 31; 32, 33) für Senden bzw. für Empfangen verwendet werden, die auf verschiedenen Seiten der Wandung eingesetzt werden.
